# EUROPÄISCHE PATENTSCHRIFT

(11) **EP 2 020 367 B1**
(45) Veröffentlichungstag und Bekanntmachung des Hinweises auf die Patenterteilung: **31.10.2012**
(21) Anmeldenummer: 08009056.6
(22) Anmeldetag: 16.05.2008
(51) Int. Cl.: B62D 65/06, B62D 25/06, B60J 7/02

(54) **Hilfsrahmensystem zur Anbindung eines jeweiligen Dachmoduls an eine Fahrzeugkarosserie**
Subframe system for attaching a relevant roof module to a car body
Système de châssis secondaire destiné à relier un module de toit donné sur une carrosserie de véhicule

(30) Priorität: 28.07.2007 DE 102007035414
(43) Veröffentlichungstag der Anmeldung: 04.02.2009
(73) Patentinhaber: GM Global Technology Operations LLC, Detroit, MI 48265-3000 (US)
(72) Erfinder: Seemann, Kim, 55299 Nackenheim (DE); Steller, Claus, 64521 Gross-Gerau (DE); Lungershausen, Dirk Rainer, 65207 Wiesbaden (DE); Hofmann, Tony, 72469 Tieringen (DE)
(74) Vertreter: Strauss, Peter

(56) Entgegenhaltungen:
- DE-A1- 10 228 410
- DE-C1- 4 313 555
- US-B1- 7 367 615

## Beschreibung

Die Erfindung betrifft ein Hilfsrahmensystem zur Anbindung von zumindest zwei unterschiedlichen Dachmodulen an eine Fahrzeugkarosserie gemäß dem Oberbegriff des Anspruches 1, sowie eine Fahrzeugkarosserie mit einem Hilfsrahmen zur Anbindung eines Dachmoduls. Sie betrifft ferner ein Verfahren zur Anbindung eines Dachmoduls an eine Fahrzeugkarosserie.

Die Anbindung eines Dachmoduls an eine Fahrzeugkarosserie mittels eines Hilfsrahmens ist bereits bekannt (vgl. beispielsweise DE 103 55 656 A1).

Bisher müssen unterschiedliche Dachmodule auf verschiedene Hilfsrahmen aufgesetzt werden, um ihre jeweilige Funktion erfüllen zu können. Es müssen somit bereits im Rohbau unterschiedliche Hilfsrahmen verwendet werden. Sind bei einem bestimmte Fahrzeugtyp beispielsweise zwei Dachvarianten wie insbesondere ein Basis-Stahldach und ein Sonnendachmodul vorgesehen, so muss bisher das Sonnendachmodul über einen speziellen Hilfsrahmen an das Fahrzeug angebunden werden, der im Rohbau in die Karosserie eingeschweißt wird und mit der Karosserie das kathodische Tauchlackierungsbad und die Lackierstraße durchläuft. Mit den beiden verschiedenen Dachvarianten wie beispielsweise Stahldach und Dachmodul sind im Rohbau also zwei im Dachbereich unterschiedliche Karosserie-Ausbaustufen erforderlich.

In der gattungsgemäßen DE 102 28 410 A1 ist ein Dachaufbau offenbart, bei dem in eine Dachöffnung zunächst ein Trägerrahmen eingesetzt ist, der gegebenenfalls mit Hilfsrahmen versehen werden kann, die die Dachöffnung in kleinere Öffnungsabschnitte unterteilt, in die unterschiedliche Dachmodule, wie z. B. transparente Scheiben oder Ladeboxen, eingesetzt werden. Auf die Hilfsrahmen kann aber auch verzichtet werden, so dass in den Trägerrahmen eine öffnungsfähige Dacheinheit eingesetzt werden kann, die die Dachöffnung vollständig abdeckt.

Die DE 43 13 555 C1 offenbart eine Dachkonstruktion, bei der in einen geschlossenen Dachrahmen ein Dachmodul eingesetzt wird.

Der Erfindung liegt die Aufgabe zugrunde, ein verbessertes Hilfsrahmensystem sowie eine verbesserte Fahrzeugkarosserie der eingangs genannten Art zu schaffen, mit denen unterschiedliche Dachmodule und insbesondere ein Dachleitermodul einfach und kostengünstig in eine Fahrzeugkarosserie integriert werden können, ohne dass dabei im Rohbau unterschiedliche Hilfsrahmen eingesetzt werden müssen. Zudem soll ein entsprechendes Verfahren zur Anbindung eines Dachmoduls an eine Fahrzeugkarosserie bereitgestellt werden.

Bezüglich des Hilfsrahmensystems wird diese Aufgabe erfindungsgemäß gelöst durch die Merkmale des Anspruchs 1.

Es wird also ein Hilfsrahmensystem zur Anbindung von zumindest zwei unterschiedlichen Dachmodulen an eine Fahrzeugkarosserie bereitgestellt, das für sämtliche an die Fahrzeugkarosserie anbindbaren Dachmodule ein gemeinsames Hilfsrahmen-Grundbauteil sowie mehrere unterschiedliche Hilfsrahmen-Ergänzungsbauteile umfasst, die an unterschiedliche Dachmodule angepasst sind und zur Vervollständigung des für ein jeweiliges Dachmodul bestimmten Hilfsrahmens jeweils lösbar mit dem Hilfsrahmen-Grundbauteil verbindbar und entsprechend austauschbar sind, wobei das Hilfsrahmensystem wenigstens ein insbesondere für ein Dachmodul mit integrierter Leiterklappe bestimmtes Hilfsrahmen-Ergänzungsbauteil mit einem schwenk- oder klappbaren Ladebalken umfasst.

Damit können verschiedene Dachmodule nun einfach und kostengünstig in eine Fahrzeugkarosserie integriert werden, ohne dass dabei im Rohbau verschiedene Hilfsrahmen verwendet werden müssen. Erfindungsgemäß ist lediglich der Teil des Hilfsrahmens, der spezifisch für die unterschiedlichen Modulvarianten ist, austauschbar gestaltet. Mit dem für die unterschiedlichen an die Fahrzeugkarosserie anbindbaren Dachmodule gemeinsamen Hilfsrahmen-Grundbauteil wird eine einheitliche Karosserie-Aufbaustufe im Rohbau ermöglicht.

Bevorzugt sind die Hilfsrahmen-Ergänzungsbauteile jeweils mit dem Hilfsrahmen-Grundbauteil verschraubbar. Grundsätzlich ist jedoch auch eine beliebige andere lösbare Verbindung denkbar, die einen entsprechenden Austausch des jeweiligen Hilfsrahmen-Ergänzungsbauteils ermöglicht.

Die Hilfsrahmen-Ergänzungsbauteile können bei in die Fahrzeugkarosserie eingebautem Hilfsrahmen beispielsweise jeweils ein hinteres Bauteil des betreffenden Hilfsrahmens darstellen. Dabei ist zu beachten, dass die Übergänge zwischen Hilfsrahmen-Grundbauteil und austauschbarem Hilfsrahmen-Ergänzungsbauteil hinten vor Korrosion zu schützen sind, da der Austausch des hinteren Hilfsrahmen-Ergänzungsbauteils in der Regel erst nach der kathodischen Tauchlackierung erfolgt.

Von Vorteil ist insbesondere, wenn das Hilfsrahmensystem zur Anbindung von einem Dachmodul mit integrierter Lei terklappe und wenigstens von einem der folgenden unterschiedlichen Dachmodule an die Fahrzeugkarosserie ausgeführt ist: Basisdachmodul, insbesondere als Ersatz für ein herkömmliches Stahlblechdach, funktionsintegrierte Dachmodule, wenigstens ein Panoramadachmodul oder Sonnendachmodul, wenigstens ein Faltschiebedachmodul und/oder dergleichen.

Das Hilfsrahmensystem kann lediglich zwei Hilfsrahmen-Ergänzungsbauteile für nur zwei unterschiedliche Dachmodule oder auch mehr als zwei Hilfsrahmen-Ergänzungsbauteile für mehr als zwei unterschiedliche Dachmodule umfassen.

Der Ladebalken ist zweckmäßigerweise zwischen einer geschlossenen Position, in der er mit dem restlichen Hilfsrahmen-Ergänzungsbauteil einen geschlossenen, vorzugsweise rechteckigen Rahmen bildet, und einer offenen Position verstellbar, in der das Hilfsrahmen-Ergänzungsbauteil an einer Seite offen ist. Dabei kann der Ladebalken bei in die Fahrzeugkarosserie eingebautem Hilfsrahmen insbesondere allgemein nach unten in seine offene Position schwenkbar bzw. klappbar sein.

In der Praxis ist der Ladebalken bei in die Fahrzeugkarosserie eingebautem Hilfsrahmen zweckmäßigerweise im hinteren Bereich des betreffenden Hilfsrahmen-Ergänzungsbauteils angeordnet.

Der Ladebalken kann an dem Hilfsrahmen-Ergänzungsbauteil und/oder an der Fahrzeugkarosserie verriegelbar sein.

Für das. Basisdachmodul kann der hintere Dachrahmenabschnitt beibehalten werden, während beispielsweise für das funktionsintegrierte Dachmodul mit integrierter Leiterklappe das hintere Hilfsrahmenteil gegen ein anderes Hilfsrahmen-Ergänzungsbauteil ausgetauscht wird. Das hintere Hilfsrahmen-Ergänzungsbauteil kann in diesem Fall beispielsweise einen kleinen Rahmen darstellen, dessen hinterer Teil verstellbar oder klappbar ausgeführt ist, was in der Regel erforderlich ist, um die Leiterklappe richtig nutzen zu können. So können durch die Klappfunktion des hinteren Teils des betreffenden Hilfsrahmen-Ergänzungsbauteils auch längere Gegenstände leicht nach unten in die Leiterklappenöffnung geschoben werden. Anschließend kann der klappbare Querträger oder Ladebalken wieder nach oben geschlossen werden, woraufhin der eingeladene Gegenstand in seiner Position verbleibt.

Die erfindungsgemäße Fahrzeugkarosserie zeichnet sich entsprechend dadurch aus, dass der Hilfsrahmen ein Hilfsrahmen-Grundbauteil sowie ein lösbar mit diesem verbindbares Hilfsrahmen-Ergänzungsbauteil insbesondere entsprechend dem erfindungsgemäßen Hilfsrahmensystem umfasst.

Das erfindungsgemäße Verfahren zeichnet sich dadurch aus, dass die Anbindung eines jeweiligen Dachmoduls an die Fahrzeugkarosserie unter Verwendung des erfindungsgemäßen Hilfsrahmensystems erfolgt.

Die Erfindung wird im Folgenden anhand eines Ausführungsbeispiels unter Bezugnahme auf die Zeichnung näher erläutert; in dieser zeigen:
- Fig. 1: eine schematische perspektivische Darstellung einer beispielhaften Ausführungsform des erfindungsgemäßen Hilfsrahmensystems, wobei die einzelnen Schritte zur Bildung des jeweiligen Hilfsrahmens für ein Basisdachmodul bzw. für ein Dachmodul mit integrierter Leiterklappe dargestellt sind, und
- Fig. 2: eine schematische perspektivische Darstellung des komplettierten Hilfsrahmens für das Dachmodul mit integrierter Leiterklappe bei seine geschlossene Position einnehmendem Ladebalken,
- Fig. 3: eine schematische perspektivische Darstellung des komplettierten Hilfsrahmens für das Dachmodul mit integrierter Leiterklappe bei seine offene Position einnehmendem Ladebalken.

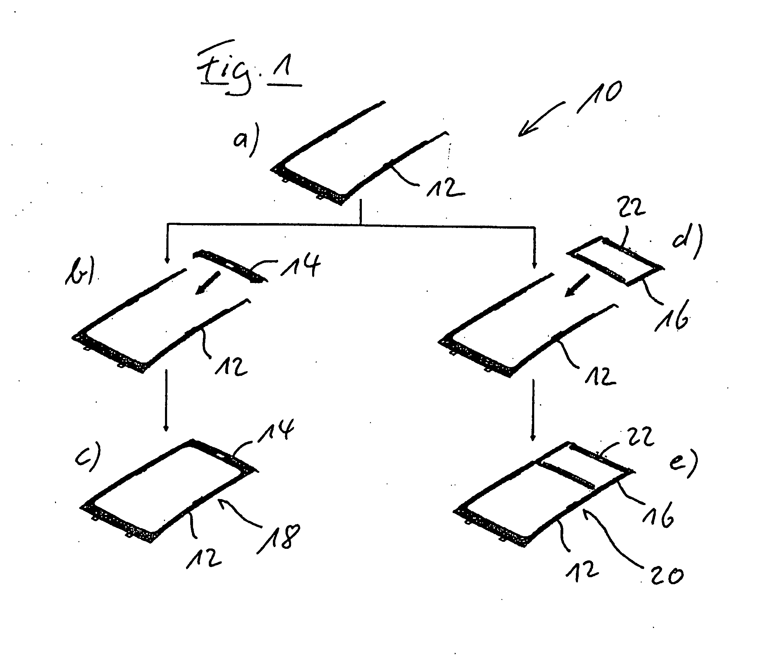

Fig. 1 zeigt in schematischer perspektivischer Darstellung eine beispielhafte Ausführungsform eines Hilfsrahmensystems 10 zur Anbindung von zumindest zwei unterschiedlichen Dachmodulen an eine Fahrzeugkarosserie.

Das Hilfsrahmensystem 10 umfasst für sämtliche an die Fahrzeugkarosserie anbindbaren Dachmodule ein gemeinsames Hilfsrahmen-Grundbauteil 12 sowie mehrere, beim vorliegenden Ausführungsbeispiel zwei unterschiedliche Hilfsrahmen-Ergänzungsbauteile 14, 16, die an unterschiedliche Dachmodule, im vorliegenden Fall ein Basisdachmodul als Ersatz für ein herkömmliches Stahlblechdach bzw. ein weiteres Dachmodul mit integrierter Leiterklappe angepasst sind und zur Vervollständigung des für das jeweilige Dachmodul bestimmten Hilfsrahmens 18 bzw. 20 (vgl. Fig. 1c und e) jeweils lösbar mit dem Hilfsrahmen-Grundbauteil 12 verbindbar und entsprechend austauschbar sind.

Dabei können die Hilfsrahmen-Ergänzungsbauteile 14, 16 jeweils mit dem Hilfsrahmen-Grundbauteil 12 insbesondere verschraubbar sein.

Beim vorliegenden Ausführungsbeispiel stellen die Hilfsrahmen-Ergänzungsbauteile 14, 16 bei in die Fahrzeugkarosserie eingebautem Hilfsrahmen 18 bzw. 20 jeweils ein hinteres Bauteil des betreffenden Hilfsrahmens 18 bzw. 20 dar.

Wie bereits erwähnt, ist das Hilfsrahmensystem 10 im vorliegenden Fall zur Anbindung von zwei unterschiedlichen Dachmodulen, nämlich zur Anbindung eines Basisdachmoduls als Ersatz für ein herkömmliches Stahlblechdach bzw. zur Anbindung eines weiteren Dachmoduls mit integrierter Leiterklappe ausgeführt. Es umfasst in diesem Fall also ein Hilfsrahmen-Ergänzungsbauteil 14 (vgl. Fig. 1b, c) für das Basisdachmodul und ein Hilfsrahmen-Ergänzungsbauteil 16 (vgl. Fig. 1d, e) für das Dachmodul mit integrierter Leiterklappe. Grundsätzlich kann das Hilfsrahmensystem 10 jedoch auch mehr als zwei Hilfsrahmen-Ergänzungsbauteile für mehr als zwei unterschiedliche Dachmodule umfassen.

Fig. 1a zeigt in schematischer perspektivischer Darstellung das für beide an die Fahrzeugkarosserie anbindbaren Dachmodule gemeinsame Hilfsrahmen-Grundbauteil 12.

Anhand der Fig. 1b und c ist zu erkennen, wie das Hilfsrahmen-Ergänzungsbauteil 14 zur Vervollständigung des für das Basisdachmodul bestimmten Hilfsrahmens 18 lösbar mit dem Hilfsrahmen-Grundbauteil 12 verbunden, insbesondere verschraubt wird.

Dagegen ist anhand der Fig. 1d und e zu erkennen, wie das Hilfsrahmen-Ergänzungsbauteil 16 zur Vervollständigung des für das Dachmodul mit integrierter Leiterklappe bestimmten Hilfsrahmens 20 lösbar mit dem Hilfsrahmen-Grundbauteil 12 verbunden, insbesondere verschraubt wird.

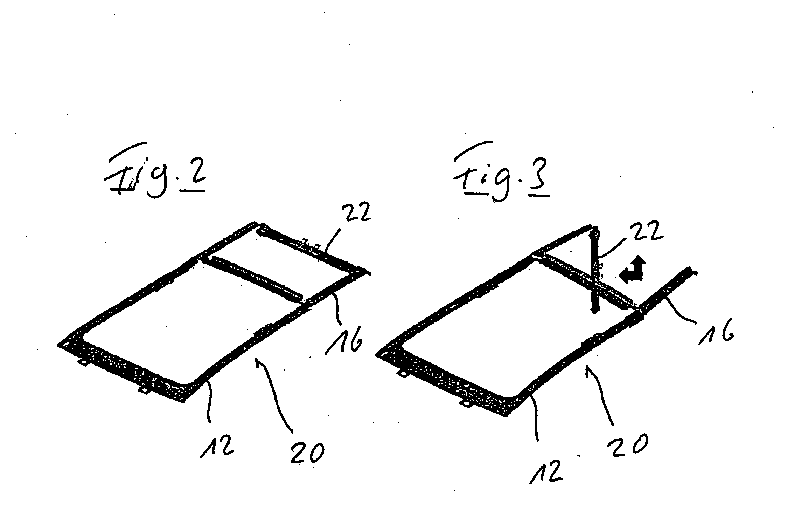

Wie insbesondere auch anhand der Fig. 2 und 3 zu erkennen ist, umfasst das für das Dachmodul mit integrierter Leiterklappe bestimmte Hilfsrahmen-Ergänzungsbauteil 16 einen verstellbaren, insbesondere schwenk- oder klappbaren Ladebalken 22.

Dabei ist dieser Ladebalken 22 zwischen einer geschlossenen Position (vgl. Fig. 2), in der er mit dem restlichen Hilfsrahmen-Ergänzungsbauteil 16 einen geschlossenen, vorzugsweise rechteckigen Rahmen bildet, und einer offenen Position (vgl. Fig. 3) verstellbar, in der das Hilfsrahmen-Ergänzungsbauteil 16 auf der hinteren Seite offen ist.

Fig. 2 zeigt in schematischer perspektivischer Darstellung den durch das Hilfsrahmen-Ergänzungsbauteil 16 komplettierten Hilfsrahmens 20 für das Dachmodul mit integrierter Leiterklappe bei seine geschlossene Position einnehmenden Ladebalken 22. Dabei ist das Hilfsrahmen-Ergänzungsbauteil 16 mit dem Hilfsrahmen-Grundbauteil 12 lösbar verbunden, insbesondere verschraubt.

Fig. 3 zeigt in schematischer perspektivischer Darstellung nochmals den komplettierten Hilfsrahmen 20 für das Dachmodul mit integrierter Leiterklappe, wobei in diesem Fall der insbesondere hintere Ladebalken 22 jedoch seine offene Position einnimmt. Wie bereits erwähnt, ist das Hilfsrahmen-Ergänzungsbauteil 16 zur Vervollständigung des Hilfsrahmens 20 mit dem Hilfsrahmen-Grundbauteil 12 lösbar verbunden, insbesondere verschraubt.

Wie anhand der Fig. 2 und 3 zu erkennen ist, ist der Ladebalken 22 bei in die Fahrzeugkarosserie eingebautem Hilfsrahmen 20 allgemein nach unten in seine offene Position verstellbar bzw. schwenkbar und klappbar.

### Bezugszeichenliste

- 10: Hilfsrahmensystem
- 12: Hilfsrahmen-Grundbauteil
- 14: Hilfsrahmen-Ergänzungsbauteil
- 16: Hilfsrahmen-Ergänzungsbauteil
- 18: Hilfsrahmen
- 20: Hilfsrahmen
- 22: Ladebalken

## Patentansprüche

1. Hilfsrahmensystem (10) zur Anbindung von zumindest zwei unterschiedlichen Dachmodulen an eine Fahrzeugkarosserie, wobei es für sämtliche an die Fahrzeugkarosserie anbindbaren Dachmodule ein gemeinsames Hilfsrahmen-Grundbauteil (12) sowie mehrere unterschiedliche Hilfsrahmen-Ergänzungsbauteile (14, 16) umfasst, die an unterschiedliche Dachmodule angepasst sind und zur Vervollständigung des für ein jeweiliges Dachmodul bestimmten Hilfsrahmens (18, 20) jeweils lösbar mit dem Hilfsrahmen-Grundbauteil (12) verbindbar und entsprechend austauschbar sind, **dadurch gekennzeichnet ,**
**dass** das Hilfsrahmensystem ein für ein Dachmodul mit integrierter Leiterklappe bestimmtes Hilfsrahmen-Ergänzungsbauteil (16) mit einem schwenk- oder klappbaren Ladebalken (22) umfasst.

2. Hilfsrahmensystem nach Anspruch 1,
**dadurch gekennzeichnet,**
**dass** die Hilfsrahmen-Ergänzungsbauteile (14, 16) jeweils mit dem Hilfsrahmen-Grundbauteil (12) verschraubbar sind.

3. Hilfsrahmensystem nach Anspruch 1 oder 2,
**dadurch gekennzeichnet ,**
**dass** die Hilfsrahmen-Ergänzungsbauteile (14, 16) bei in die Fahrzeugkarosserie eingebautem Hilfsrahmen (18, 20) jeweils eines hinteres Bauteil des betreffenden Hilfsrahmens (18, 20) darstellen.

4. Hilfsrahmensystem nach einem der vorhergehenden Ansprüche,
**dadurch gekennzeichnet ,**
**dass** es zur Anbindung von einem Dachmodul mit integrierter Leiterklappe und wenigstens von einem der folgenden unterschiedlichen Dachmodule an die Fahrzeugkarosserie ausgeführt ist: Basisdachmodul insbesondere als Ersatz für ein herkömmliches Stahlblechdach, funktionsintegrierte Dachmodule,wenigstens ein Panoramadachmodul, wenigstens ein Faltschiebedachmodul und/oder dergleichen.

5. Hilfsrahmensystem nach einem der vorhergehenden Ansprüche,
**dadurch gekennzeichnet ,**
**dass** es lediglich zwei Hilfsrahmen-Ergänzungsbauteile (14, 16) für nur zwei unterschiedliche Dachmodule umfasst.

6. Hilfsrahmensystem nach einem der Ansprüche 1 bis 4, **dadurch gekennzeichnet,**
**dass** es mehr als zwei Hilfsrahmen-Ergänzungsbauteile (14, 16) für mehr als zwei unterschiedliche Dachmodule umfasst.

7. Hilfsrahmensystem nach Anspruch 1,
**dadurch gekennzeichnet,**
**dass** der Ladebalken (22) zwischen einer geschlossenen Position, in der er mit dem restlichen Hilfsrahmen-Ergänzungsbauteil (16) einen geschlossenen, vorzugsweise rechteckigen Rahmen bildet, und einer offenen Position verstellbar ist, in der das Hilfsrahmen-Ergänzungsbauteil (16) an einer Seite offen ist.

8. Hilfsrahmensystem nach Anspruch 7,
**dadurch gekennzeichnet dass** der Ladebalken (22) bei in die Fahrzeugkarosserie eingebautem Hilfsrahmen (20) allgemein nach unten in seine offene Position verstellbar bzw.
schwenkbar oder klappbar ist.

9. Hilfsrahmensystem nach Anspruch 7 oder 8,
**dadurch gekennzeichnet ,**
**dass** der Ladebalken (22) bei in die Fahrzeugkarosserie eingebautem Hilfsrahmen (20) im hinteren Bereich des betreffenden Hilfsrahmen-Ergänzungsbauteils (16) angeordnet ist.

10. Hilfsrahmensystem nach einem der vorhergehenden Ansprüche,
**dadurch gekennzeichnet dass** der Ladebalken (22) an dem Hilfsrahmen-Ergänzungsbauteil (16) und/oder an der Fahrzeugkarosserie verriegelbar ist.

11. Fahrzeugkarosserie mit einem Hilfsrahmen (18, 20) zur Anbindung eines Dachmoduls,
**dadurch gekennzeichnet dass** der Hilfsrahmen (18, 20) ein Hilfsrahmen-Grundbauteil (12) sowie ein lösbar mit diesem verbindbares Hilfsrahmen-Ergänzungsbauteil (14, 16) insbesondere entsprechend dem Hilfsrahmensystem (10) nach einem der vorhergehenden Ansprüche umfasst.

12. Verfahren zur Anbindung eines Dachmoduls an eine Fahrzeugkarosserie unter Verwendung des Hilfsrahmensystems (10) nach einem der Ansprüche 1 bis 10.

## Claims

1. A subframe system (10) for connecting at least two different roof modules to a vehicle body, with said system (10) comprising a common basic subframe component (12) and several different supplementary subframe components (14, 16) for all roof modules connectable to the vehicle body, which supplementary subframe components (14, 16) are adjusted to different roof modules and are respectively releasably connectable and respectively exchangeable with the basic subframe component (12) for completing the subframe (18, 20) designated for a specific roof module, **characterized in that** the subframe system comprises a supplementary subframe component (16) with a pivotable or foldable loading beam (22), which supplementary subframe component (16) is intended for a roof module with integrated roof light.

2. A subframe system according to claim 1, **characterized in that** the supplementary subframe components (14, 16) can respectively be screwed together with the basic subframe component (12).

3. A subframe system according to claim 1 or 2, **characterized in that** when the subframe (18, 20) is installed in the vehicle body the supplementary subframe components (14, 16) respectively represent a rear component of the respective subframe (18, 20).

4. A subframe system according to one of the preceding claims, **characterized in that** it is arranged for connecting a roof module with integrated roof light and at least one of the following different roof modules to the vehicle body: a basic roof module, especially as a replacement for a conventional sheet-steel roof, functionally integrated roof modules, at least one panoramic roof module, at least one sliding canvas sunroof module, and/or the like.

5. A subframe system according to one of the preceding claims, **characterized in that** it merely comprises two supplementary subframe components (14, 16) for only two different roof modules.

6. A subframe system according to one of the claims 1 to 4, **characterized in that** it comprises more than two supplementary subframe components (14, 16) for more than two different roof modules.

7. A subframe system according to claim 1, **characterized in that** the loading beam (22) is adjustable between a closed position in which it forms a closed, preferably rectangular, frame with the remaining supplementary subframe component (16) and an open position in which the supplementary subframe component (16) is open on one side.

8. A subframe system according to claim 7, **characterized in that** when the subframe (20) is installed in the vehicle body the loading beam (22) is generally downwardly adjustable, pivotable or foldable to its open position.

9. A subframe system according to claim 7 or 8, **characterized in that** when the subframe (20) is installed in the vehicle body the loading beam (22) is arranged in the rear region of the respective supplementary subframe component (16).

10. A subframe system according to one of the preceding claims,
**characterized in that** the loading beam (22) can be locked on the supplementary subframe component (16) and/or on the vehicle body.

11. A vehicle body with a subframe (18, 20) for connecting a
roof module, **characterized in that** the subframe (18, 20) comprises a basic subframe component (12) and a supplementary subframe component (14, 16) which can detachably be connected with said basic subframe component (12), especially according to the subframe system (10) according to one of the preceding claims.

12. A method for connecting a roof module to a vehicle body by
using the subframe system (10) according to one of the claims 1 to 10.

## Revendications

1. Système de cadre auxiliaire (10) pour le montage d'au moins deux modules de toit différents à une carrosserie de véhicule, qui comprend pour tous les modules de toit pouvant être montés sur la carrosserie de véhicule un composant de base de cadre auxiliaire (12) et plusieurs composants complémentaires de cadre auxiliaire (14, 16) différents, qui sont adaptés à différents modules de toit et peuvent, pour compléter le cadre auxiliaire (18, 20) destiné à un module de toit donné, être reliés de façon amovible au composant de base de cadre auxiliaire (12) et échangés de manière correspondante, **caractérisé en ce que** le système de cadre auxiliaire comprend un composant complémentaire de cadre auxiliaire (16) avec une barre de chargement (22) pivotante ou rabattable, destiné à un module de toit avec trappe arrière.

2. Système de cadre auxiliaire selon la revendication 1, **caractérisé en ce que** les composants complémentaires de cadre auxiliaire (14, 16) peuvent être vissés chacun au composant de base de cadre auxiliaire (12).

3. Système de cadre auxiliaire selon la revendication 1 ou 2, **caractérisé en ce que** les composants complémentaires de cadre auxiliaire (14, 16) représentent chacun, quand le cadre auxiliaire (18, 20) est monté dans la carrosserie de véhicule, un composant arrière du cadre auxiliaire (18, 20) en question.

4. Système de cadre auxiliaire selon l'une des revendications précédentes, **caractérisé en ce que** qu'il est réalisé en vue de monter un module de toit avec trappe arrière intégrée et au moins un des modules de toit différents suivants à la carrosserie de véhicule : module de toit de base, en particulier en remplacement d'un toit en tôle d'acier ordinaire, au moins un module de toit panoramique, au moins un module de toit pliant et/ou similaires.

5. Système de cadre auxiliaire selon l'une des revendications précédentes, **caractérisé en ce qu'**il comprend seulement deux composants complémentaires de cadre auxiliaire (14, 16) pour seulement deux modules de toit différents.

6. Système de cadre auxiliaire selon l'une des revendications 1 à 4, **caractérisé en ce qu'**il comprend plus de deux composants complémentaires de cadre auxiliaire (14, 16) pour plus de deux modules de toit différents.

7. Système de cadre auxiliaire selon la revendication 1, **caractérisé en ce que** la barre de chargement (22) est déplaçable entre une position fermée dans laquelle elle forme avec le reste du composant complémentaire de cadre auxiliaire (16) un cadre fermé, de préférence rectangulaire, et une position ouverte dans laquelle le composant complémentaire de cadre auxiliaire (16) est ouvert d'un côté.

8. Système de cadre auxiliaire selon la revendication 7, **caractérisé en ce que** la barre de chargement (22) peut généralement se déplacer, pivoter ou se rabattre vers le bas dans sa position ouverte quand le cadre auxiliaire (20) est monté dans la carrosserie de véhicule.

9. Système de cadre auxiliaire selon la revendication 7 ou 8, **caractérisé en ce que** la barre de chargement (22) est disposée dans la partie arrière du composant complémentaire de cadre auxiliaire (16) concerné quand le cadre auxiliaire (20) est monté dans la carrosserie de véhicule.

10. Système de cadre auxiliaire selon l'une des revendications précédentes, **caractérisé en ce que** la barre de chargement (22) peut être verrouillée sur le composant complémentaire de cadre auxiliaire (16) et/ou sur la carrosserie de véhicule.

11. Carrosserie de véhicule avec un cadre auxiliaire (18, 20) destiné au montage d'un module de toit, **caractérisée en ce que** le cadre auxiliaire (18, 20) comprend un composant de base de cadre auxiliaire (12) ainsi qu'un composant complémentaire de cadre auxiliaire (14, 16) pouvant être relié de manière amovible à celui-ci, correspondant en particulier au système de cadre auxiliaire (10) selon l'une des revendications précédentes.

12. Procédé pour le montage d'un module de toit à une carrosserie de véhicule en utilisant le système de cadre auxiliaire (10) selon l'une des revendications 1 à 10.
